# EUROPEAN PATENT APPLICATION

(11) **EP 4 831 022 A1**
(43) Date of publication of application: **28.10.2026**
(21) Application number: 25902786.0
(22) Date of filing: 25.07.2025
(51) Int. Cl.: B60W 20/10, B60W 10/06, B60W 10/08, B60W 10/30

(54) **DRIVING CONTROL METHOD AND APPARATUS FOR HYBRID VEHICLE, DEVICE, STORAGE MEDIUM, AND PRODUCT**

(30) Priority: 13.12.2024 CN 202411835890
(71) Applicant: Chery Automobile Co., Ltd., Wuhu, Anhui 241006 (CN)
(72) Inventor: LI, Qin, Wuhu, Anhui 241006 (CN); LIANG, Jing, Wuhu, Anhui 241006 (CN); HAN, Yun, Wuhu, Anhui 241006 (CN)
(74) Representative: Adamson Jones
(86) International application number: PCT/CN2025/110533
(87) International publication number: WO 2026/123697

(57) **Abstract**

The present application belongs to the technical field of vehicles, and discloses a driving control method and apparatus for a hybrid vehicle, a device, a storage medium, and a product. The method comprises: heating a battery and a cabin of a hybrid vehicle by means of an air conditioner; when a battery cell temperature is lower than a second preset temperature, determining, on the basis of the battery cell temperature, a target rotational speed value matching the battery cell temperature; controlling a rotational speed value of an engine to be the target rotational speed value; on the basis of a degree of travel of an accelerator pedal, determining an actual driving power of a driving motor of the hybrid vehicle; determining, on the basis of the actual driving power of the driving motor, a first available power of a generator of the hybrid vehicle, controlling, on the basis of the first available power, the generator to generate electricity, and storing electrical energy generated by the generator in the battery; and determining an actual power generation power of the generator, determining, on the basis of the actual power generation power of the generator, a second available power of the driving motor, and outputting the second available power to the driving motor, such that, on the basis of the second available power, the driving motor drives the hybrid vehicle to run.

## Description

The present disclosure is based on and claims priority to Chinese Patent Application No. 202411835890.8, filed on December 13, 2024, and entitled "DRIVING CONTROL METHOD, DEVICE AND EQUIPMENT OF HYBRID ELECTRIC VEHICLE, STORAGE MEDIUM AND PRODUCT," the entire contents of which are incorporated herein by reference.

### TECHNICAL FIELD

The present disclosure relates to the technical field of vehicles, and particularly to a driving control method and apparatus for a hybrid electric vehicle, a device, a storage medium, and a product.

### BACKGROUND

In ultra-low temperature environments (temperatures below -30°C), in the case that a hybrid electric vehicle remains idle for a long period, the battery temperature of the hybrid electric vehicle will gradually decrease and approach the ambient temperature. At this point, the battery's discharge power will experience a steep decline, directly affecting the startup and operation of the hybrid electric vehicle.

### SUMMARY

The embodiments of the present disclosure provide a driving control method and apparatus for a hybrid electric vehicle, a device, a storage medium, and a product. The technical solution is as follows.

On the one hand, a driving control method for a hybrid electric vehicle is provided, the method including: determining, in response to the hybrid electric vehicle being powered on, an ambient temperature of the hybrid electric vehicle; in response to the ambient temperature being lower than a first predetermined temperature, starting an engine of the hybrid electric vehicle to charge a battery of the hybrid electric vehicle via the engine, and turning on an air conditioner of the hybrid electric vehicle to heat the battery and a cockpit of the hybrid electric vehicle via the air conditioner; determining a cell temperature of the battery; and in response to the cell temperature being lower than a second predetermined temperature and the hybrid electric vehicle being started, determining a target rotational speed value that matches the cell temperature based on the cell temperature; and controlling a rotational speed value of the engine to be the target rotational speed value; determining an accelerator pedal position of the hybrid electric vehicle and determining an actual drive power of a drive motor of the hybrid electric vehicle based on the accelerator pedal position; determining a first available power of a generator of the hybrid electric vehicle based on the actual drive power of the drive motor, controlling the generator to generate electrical energy based on the first available power, and storing the electrical energy generated by the generator in the battery; and determining an actual generation power of the generator, determining a second available power of the drive motor based on the actual generation power of the generator, and outputting the second available power to the drive motor to enable the drive motor to drive the hybrid electric vehicle based on the second available power.

In some embodiments, determining the first available power of the generator of the hybrid electric vehicle based on the actual drive power of the drive motor includes: determining a battery peak charging power and a battery continuous discharging power of the battery; determining an available power for the air conditioner based on the accelerator pedal position, the battery peak charging power, and the battery continuous discharging power; and determining the first available power of the generator based on the available power of the air conditioner, the battery peak charging power, and the actual drive power of the drive motor.

In some embodiments, controlling the generator to generate electrical energy based on the first available power includes: determining an allowable generation power of the engine based on the first available power; and controlling the generator to generate electrical energy based on the allowable generation power of the engine.

In some embodiments, determining the allowable generation power of the engine based on the first available power includes: determining a driver requested power of the hybrid electric vehicle based on the accelerator pedal position; determining an original generation power of the generator based on the driver requested power; and determining the allowable generation power of the engine based on the original generation power and the first available power.

In some embodiments, the method further includes: determining an original torque of the engine based on the allowable generation power and the target rotational speed value of the engine; determining an allowable maximum torque of the drive motor and an allowable minimum torque of the generator; determining a requested torque of the engine based on the original torque, the allowable maximum torque, and the allowable minimum torque; and controlling the engine based on the requested torque of the engine.

In some embodiments, determining the allowable maximum torque of the drive motor and the allowable minimum torque of the generator includes: determining a motor efficiency table and a motor speed of the generator; determining the allowable maximum torque of the drive motor based on the second available power, the motor efficiency table, and the motor speed; and determining the allowable minimum torque of the generator based on the first available power, the motor efficiency table, and the motor speed.

On the other hand, a driving control apparatus for a hybrid electric vehicle is provided, the apparatus including: a first determining module, configured to: determine, in response to the hybrid electric vehicle being powered on, an ambient temperature of the hybrid electric vehicle; a starting module, configured to: in response to the ambient temperature being lower than a first predetermined temperature, start an engine of the hybrid electric vehicle to charge a battery of the hybrid electric vehicle via the engine, and turn on an air conditioner of the hybrid electric vehicle to heat the battery and a cockpit of the hybrid electric vehicle via the air conditioner; a second determining module, configured to: determine a cell temperature of the battery; and in response to the cell temperature being lower than a second predetermined temperature and the hybrid electric vehicle being started, determine a target rotational speed value that matches the cell temperature based on the cell temperature; and control a rotational speed value of the engine to be the target rotational speed value; a third determining module, configured to: determine an accelerator pedal position of the hybrid electric vehicle and determine an actual drive power of a drive motor of the hybrid electric vehicle based on the accelerator pedal position; a fourth determining module, configured to: determine a first available power of a generator of the hybrid electric vehicle based on the actual drive power of the drive motor, control the generator to generate electrical energy based on the first available power, and store the electrical energy generated by the generator in the battery; and a fifth determining module, configured to: determine an actual generation power of the generator, determine a second available power of the drive motor based on the actual generation power of the generator, and output the second available power to the drive motor to enable the drive motor to drive the hybrid electric vehicle based on the second available power.

In some embodiments, the fourth determining module is configured to: determine a battery peak charging power and a battery continuous discharging power of the battery; determine an available power for the air conditioner based on the accelerator pedal position, the battery peak charging power, and the battery continuous discharging power; and determine the first available power of the generator based on the available power of the air conditioner, the battery peak charging power, and the actual drive power of the drive motor.

In some embodiments, the fourth determining module is configured to: determine an allowable generation power of the engine based on the first available power; and control the generator to generate electrical energy based on the allowable generation power of the engine.

In some embodiments, the fourth determining module is configured to: determine a driver requested power of the hybrid electric vehicle based on the accelerator pedal position; determine an original generation power of the generator based on the driver requested power; and determine the allowable generation power of the engine based on the original generation power and the first available power.

In some embodiments, the device further includes: a sixth determining module, configured to determine an original torque of the engine based on the allowable generation power and the target rotational speed value of the engine; a seventh determining module, configured to determine an allowable maximum torque of the drive motor and an allowable minimum torque of the generator; an eighth determining module, configured to determine a requested torque of the engine based on the original torque, the allowable maximum torque, and the allowable minimum torque; and a controlling module, configured to control the engine based on the requested torque of the engine.

In some embodiments, the seventh determining module is configured to: determine a motor efficiency table and a motor speed of the generator; determine the allowable maximum torque of the drive motor based on the second available power, the motor efficiency table, and the motor speed; and determine the allowable minimum torque of the generator based on the first available power, the motor efficiency table, and the motor speed.

On the other hand, a vehicle control unit is provided, including a main control module, wherein the main control module includes a processor and a memory, the memary storing one or more program codes, wherein the one or more program codes, when loaded and executed by the processor, cause the vehicle control unit to perform the driving control method for a hybrid electric vehicle as described above.

On the other hand, a computer-readable storage medium is provided, wherein the storage medium stores one or more program codes, wherein the one or more program codes, when loaded and executed by a processor, cause the processor to perform the driving control method for a hybrid electric vehicle as described above.

On the other hand, a computer program product is provided, wherein the product stores one or more program codes, wherein the one or more program codes, when executed by a processor, cause the processor to perform the driving control method for a hybrid electric vehicle as described above.

In the embodiments of the present disclosure, under ultra-low temperature conditions, by fixing the rotational speed value, the actual drive power of the drive motor is made to increase with the increase in accelerator pedal position. The increase in the actual power of the drive motor leads to an increase in the first available power of the generator, which in turn leads to an increase in the actual generation power of the generator. This increase in the actual generation power of the generator further leads to an increase in the second available power of the drive motor. Thus, under ultra-low temperature conditions, the second available power of the drive motor and the first available power of the generator change steadily. The stable second and first available powers enable the hybrid electric vehicle to maintain a certain speed and move forward steadily under ultra-low temperature conditions. Therefore, the application geographical range of the hybrid electric vehicle extends from a product perspective. For example, the hybrid electric vehicle can operate in ultra-low temperature geographical ranges. From a customer perspective, it allows for immediate driving without waiting for an empty vehicle, which enhances vehicle usage satisfaction.

It should be understood that the general description above and the detailed descriptions in the following text are merely exemplary and do not limit the present disclosure.

### BRIEF DESCRIPTION OF DRAWINGS

FIG. 1 is a schematic diagram of the implementation environment of the driving control method for a hybrid electric vehicle according to some embodiments of the present disclosure;
FIG. 2 is a flowchart of a driving control method for a hybrid electric vehicle according to some embodiments of the present disclosure;
FIG. 3 is a schematic diagram of a driving control method for a hybrid electric vehicle according to some embodiments of the present disclosure;
FIG. 4 is a flowchart of a driving control method for a hybrid electric vehicle according to some embodiments of the present disclosure;
FIG. 5 is a block diagram of a driving control apparatus for a hybrid electric vehicle according to some embodiments of the present disclosure; and
FIG. 6 is a block diagram of a vehicle control unit according to some embodiments of the present disclosure.

### DETAILED DESCRIPTION

For clearer descriptions of the technical solutions and advantages of the present disclosure, embodiments of the present disclosure are further described in detail hereinafter.

The terms "first," "second," "third," and "fourth" in the specification, claims, and accompanying drawings of the present disclosure are used to distinguish different objects, rather than to describe a specific order. Furthermore, the terms "comprising" and "having" and any variations thereof are intended to cover non-exclusive inclusions. For example, processes, methods, systems, products, or devices that include a series of steps or elements are not limited to the listed steps or elements, but may optionally include additional steps or elements not listed, or may optionally include other steps or elements inherent to such processes, methods, products, or devices.

It should be noted that the information (including but not limited to user equipment information, user personal information, and the like), data (including but not limited to data for analysis, stored data, displayed data, and the like), and signals involved in the present disclosure are all authorized by the users or fully authorized by the parties. The collection, use, and processing of relevant data shall comply with the relevant laws, regulations, and standards of the relevant countries and regions. For example, the ambient temperature, cell temperature, and accelerator pedal position involved in the present disclosure are all obtained with full authorization.

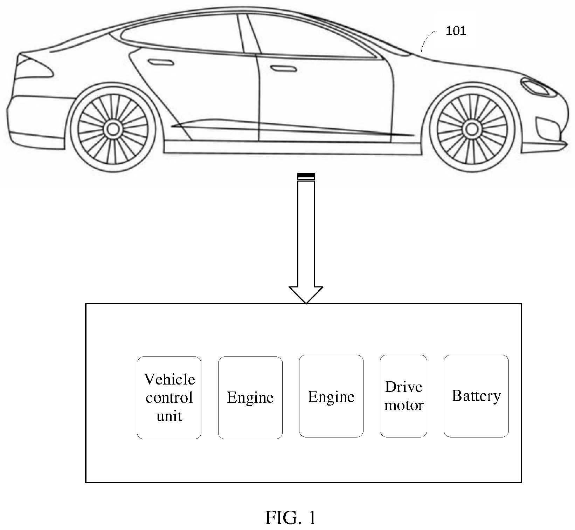

Please refer to FIG. 1, which illustrates a schematic diagram of the implementation environment of the driving control method for a hybrid electric vehicle according to some embodiments of the present disclosure. The implementation environment includes a hybrid electric vehicle 101, which is a hybrid electric vehicle (HEV) or a plug-in hybrid electric vehicle (PHEV), or the like. Furthermore, the hybrid electric vehicle 101 is equipped with a vehicle control unit, an engine, a generator, a drive motor, and a battery. The vehicle control unit is responsible for controlling the generator, the generator, and the drive motor. The engine is used to drive the generator to generate electrical energy; moreover, the engine does not directly drive the wheels but instead drives the generator to generate electrical energy. The generator is used to convert the mechanical energy generated by the engine into electrical energy and supply the generated electrical energy to the drive motor or charge the battery. The drive motor is the power output device of the hybrid electric vehicle and is configured to directly drive the wheels. Furthermore, the drive motor is capable of obtaining electrical energy from the battery or through the generator to provide power.

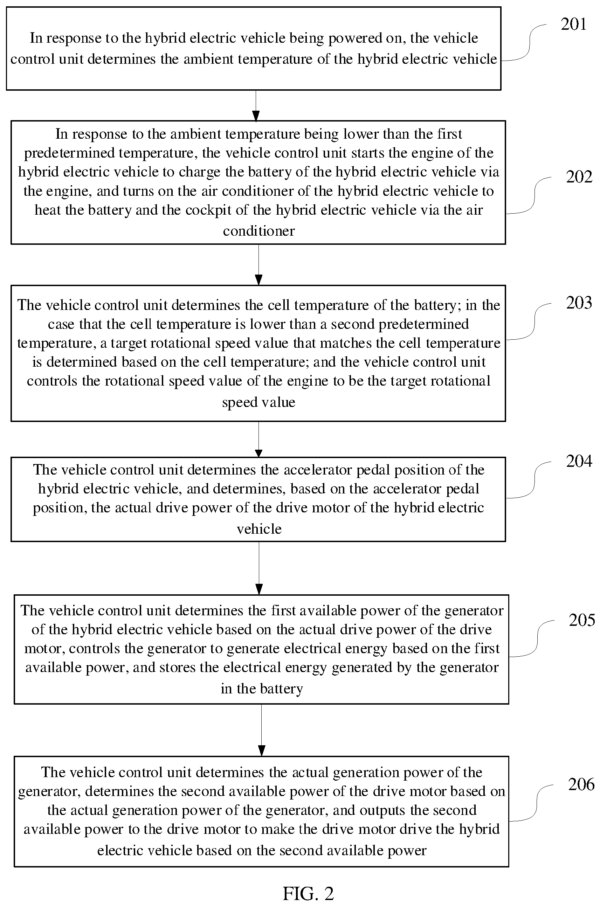

FIG. 2 illustrates a flowchart of a driving control method for a hybrid electric vehicle according to some embodiments of the present disclosure. Referring to FIG. 2, the method includes the following processes.

In process 201, in response to the hybrid electric vehicle being powered on, the vehicle control unit determines the ambient temperature of the hybrid electric vehicle.

In the case that the hybrid electric vehicle is powered on, the hybrid electric vehicle enters the Ready state, indicating that the hybrid electric vehicle is about to be started and driven. At this time, the vehicle control unit determines the ambient temperature via a temperature sensor of the hybrid electric vehicle. In some embodiments, in the case that the hybrid electric vehicle is powered on, the vehicle control unit determines the ambient temperature of the hybrid electric vehicle, thereby improving the efficiency of driving control. In some embodiments, in the case that the hybrid electric vehicle is powered on, the vehicle control unit determines the lock-up duration of the hybrid electric vehicle. In the case that the lock-up duration of the hybrid electric vehicle is greater than a first predetermined duration, it indicates that the hybrid electric vehicle has not been started for a long time, and the battery temperature of the hybrid electric vehicle is relatively low. At this time, the ambient temperature of the hybrid electric vehicle is determined. In the case that the lock-up duration of the hybrid electric vehicle is not greater than the first predetermined duration, it indicates that the hybrid electric vehicle was started not long ago and the battery temperature of the hybrid electric vehicle is usually not very low. In this case, there is no need to determine the ambient temperature of the hybrid electric vehicle, and the hybrid electric vehicle is driven directly based on the drive motor of the hybrid electric vehicle in some embodiments.

In some embodiments, in cold regions (where the ambient temperature is below a third predetermined temperature), the driving of the hybrid electric vehicle is controlled according to the method provided in the embodiments of the present disclosure. In warm regions (where the ambient temperature is above the third predetermined temperature), the hybrid electric vehicle is driven directly based on the drive motor of the hybrid electric vehicle. Furthermore, in the case that the hybrid electric vehicle enters a cold region, the vehicle control unit stores the region type. Correspondingly, in some embodiments, process 201 includes: in the case that the hybrid electric vehicle is powered on, the vehicle control unit determines the region type where the hybrid electric vehicle is located, and in the case where the region type is a cold region, the vehicle control unit determines the ambient temperature of the hybrid electric vehicle.

In the case that the vehicle control unit determines the ambient temperature, it is determined whether the ambient temperature is lower than a first predetermined temperature; and in the case that the ambient temperature is lower than the first predetermined temperature, process 202 is executed; and in the case that the ambient temperature is not lower than the first predetermined temperature, the hybrid electric vehicle is driven directly based on the drive motor of the hybrid electric vehicle. In some embodiments, the first predetermined temperature is set and changed as needed. In embodiments of the present disclosure, the first predetermined temperature is not specifically limited. In some embodiments, the first predetermined temperature is -15°C, -20°C, - 25°C, or the like.

In process 202, in the case that the ambient temperature is lower than the first predetermined temperature, the vehicle control unit starts the engine of the hybrid electric vehicle, charges the battery of the hybrid electric vehicle via the engine, and turns on the air conditioner of the hybrid electric vehicle to heat the battery and the cockpit of the hybrid electric vehicle via the air conditioner.

Because in low temperature environments, the battery's discharge capacity is weak (with a steep decline in discharge power), and the battery not only has to drive the vehicle but also heat the battery and the cockpit, in the case that the engine is not started to replenish power, the drive power of the hybrid electric vehicle will be lower and the hybrid electric vehicle is prone to battery depletion. Therefore, in the case that the ambient temperature is below a first predetermined temperature, the engine of the hybrid electric vehicle is started immediately, and the battery of the hybrid electric vehicle is charged by the engine; and the battery and the cockpit are heated via the air conditioner to restore the battery's discharge capacity as soon as possible (i.e., to increase the battery's discharge power).

In process 203, the vehicle control unit determines the cell temperature of the battery; in the case that the cell temperature is lower than a second predetermined temperature, a target rotational speed value that matches the cell temperature is determined based on the cell temperature; and the vehicle control unit controls the rotational speed value of the engine to be the target rotational speed value.

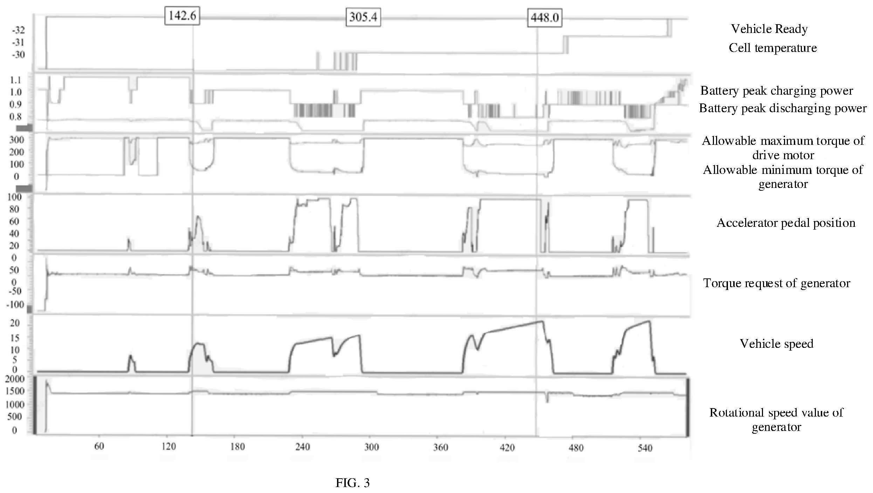

In some embodiments, in the case that the cell temperature is below a second predetermined temperature, the vehicle control unit controls the rotational speed value at the target rotational speed value, meaning that the engine rotational speed does not change with the accelerator pedal position, and only the engine torque changes with the acceleration demand. As the battery is heated, the cell temperature gradually increases, and the vehicle control unit detects the cell temperature in real time. In the case that the cell temperature is above the second predetermined temperature, the vehicle control unit releases the restriction on the rotational speed value, and both the engine and torque change with the acceleration demand. In some embodiments, please refer to FIG. 3, where the cell temperature is -35°C. FIG. 3 also shows the curve of accelerator pedal position, the curve of rotational speed value, and the curve of vehicle speed during the driving process of a hybrid electric vehicle (specifically referring to the starting stage).

In some embodiments, the vehicle control unit stores in advance the correspondence between the cell temperature and the rotational speed value, meaning that one cell temperature corresponds to one rotational speed value. Correspondingly, in some embodiments, the process for the vehicle control unit to determine the target rotational speed value that matches the cell temperature based on the cell temperature is as follows: the vehicle control unit obtains the target rotational speed value corresponding to the cell temperature from the correspondence between the cell temperature and the rotational speed value based on the cell temperature.

In some embodiments, the vehicle control unit stores in advance the correspondence between the temperature range of the battery cell and the rotational speed value, that is, one temperature range of the battery cell corresponds to one rotational speed value. Accordingly, in some embodiments, the process for the vehicle control unit to determine the target rotational speed value that matches the cell temperature based on the cell temperature is as follows: the vehicle control unit determines the temperature range of the battery cell to which the cell temperature belongs, and based on this temperature range of the battery cell, obtains the target rotational speed value corresponding to the temperature range of the battery cell from the correspondence between the temperature range of the battery cell and the rotational speed value.

In the embodiments of the present disclosure, under ultra-low temperature conditions, to enhance the overall driving efficiency of hybrid electric vehicles, the vehicle control unit maps different engine rotational speeds based on various battery cell temperature ranges and maintains a fixed engine rotational speed. The reason for maintaining a fixed engine rotational speed is that in the extended-range working mode (the working mode where the engine is started), the engine adopts a speed control mode.

In some embodiments, the second predetermined temperature is set and changed as needed. In embodiments of the present disclosure, there is no specific limitation on the second predetermined temperature. In some embodiments, the second predetermined temperature is -25 °C or -30°C, etc.

In process 204, the vehicle control unit determines the accelerator pedal position of the hybrid electric vehicle, and based on the accelerator pedal position, determines the actual drive power of the drive motor of the hybrid electric vehicle.

The actual drive power of the drive motor is positively correlated with the accelerator pedal position, that is, the greater the accelerator pedal position, the greater the actual drive power of the drive motor, and the smaller the accelerator pedal position, the smaller the actual drive power of the drive motor. In some embodiments, the vehicle control unit stores the correspondence between accelerator pedal position and drive power in advance, that is, one accelerator pedal position corresponds to one drive power. Accordingly, in some embodiments, the process for the vehicle control unit to determine the actual drive power of the drive motor of the hybrid electric vehicle based on the accelerator pedal position includes: the vehicle control unit acquires the drive power corresponding to the accelerator pedal position from the correspondence between accelerator pedal position and drive power based on the accelerator pedal position, wherein this drive power is the actual drive power of the drive motor.

In some embodiments, the vehicle control unit stores in advance the correspondence between the accelerator pedal position range and the drive power, that is, one accelerator pedal position range corresponds to one drive power. Correspondingly, in some embodiments, the process for the vehicle control unit to determine the actual drive power of the drive motor of the hybrid electric vehicle based on the accelerator pedal position includes: the vehicle control unit determines the accelerator pedal position range to which the accelerator pedal position belongs based on the accelerator pedal position, and based on this accelerator pedal position range, acquires the driving power corresponding to the accelerator pedal position range from the correspondence between the accelerator pedal position range and the driving power. This driving power is the actual drive power of the drive motor.

In some embodiments, the vehicle control unit directly reads the actual drive power of the drive motor. Correspondingly, in some embodiments, the process for the vehicle control unit to determine the actual drive power of the drive motor of the hybrid electric vehicle based on the accelerator pedal position includes: the vehicle control unit reads the actual drive power of the drive motor in the case that an accelerator pedal position of the hybrid electric vehicle is at this accelerator pedal position.

In process 205, the vehicle control unit determines the first available power of the generator of the hybrid electric vehicle based on the actual drive power of the drive motor, controls the generator to generate electrical energy based on the first available power, and stores the electrical energy generated by the generator in the battery.

In some embodiments, the process for the vehicle control unit to determine the first available power of the generator in a hybrid electric vehicle based on the actual drive power of the drive motor is achieved through the following processes (1) to (3), which include the following.
(1) The vehicle control unit determines the battery peak charging power and battery continuous discharging power of the battery.

Battery charging power: the battery charging power is used to indicate the recycling capacity or the charging capacity of the generator; therefore, the battery peak charging power is used to indicate the recycling capacity or the maximum charging capacity of the generator. In some embodiments, the battery peak charging power is fixed and stored in the vehicle control unit; accordingly, the process for the vehicle control unit to determine the battery peak charging power of the battery includes: the vehicle control unit acquires the stored battery peak charging power.

In some embodiments, the vehicle control unit determines the battery peak charging power based on the battery charging power during a recent period. Correspondingly, in some embodiemnts, the process for the vehicle control unit to determine the battery peak charging power of the battery includes: the vehicle control unit acquires the battery charging power of the battery within a second predetermined duration before the current time, and based on the battery charging power within the second predetermined duration, determines the maximum value of the battery charging power to acquire the battery peak charging power.

In some embodiments, different ambient temperatures correspond to different battery peak charging powers. The vehicle control unit acquires the battery peak charging power under the current environment. Correspondingly, in some embodiments, the process for the vehicle control unit to determine the battery peak charging power of the battery includes: based on the ambient temperature, the vehicle control unit acquires the battery peak charging power corresponding to the ambient temperature from the correspondence between ambient temperature and peak charging power.

In some embodiments, different cell temperatures correspond to different battery peak charging powers. The vehicle control unit acquires the battery peak charging power corresponding to the current cell temperature. Correspondingly, in some embodiments, the process for the vehicle control unit to determine the battery peak charging power of the battery includes: the vehicle control unit acquires the battery peak charging power corresponding to the cell temperature from the correspondence between cell temperature and peak charging power based on the cell temperature.

Battery discharging power: the battery discharging power is used to indicate the driving capability of a generator; therefore, the battery continuous discharging power is used to indicate the continuous driving capability of a generator. In some embodiments, the battery continuous discharging power is constant and stored in the vehicle control unit; accordingly, the process for the vehicle control unit to determine the battery continuous discharging power of the battery includes: the vehicle control unit acquires the stored battery continuous discharging power.

In some embodiments, the vehicle control unit determines the battery continuous discharging power based on the battery charging power during the recent period. Correspondingly, in some embodiments, the process for the vehicle control unit to determine the battery continuous discharging power of the battery includes: the vehicle control unit acquires the battery discharging power of the battery within a third predetermined time period before the current time, and determines the battery continuous discharging power based on the battery discharging power within the third predetermined time period. In some embodiments, the third predetermined time period includes a plurality of sampling times, and the process for the vehicle control unit to determine the battery continuous discharging power based on the battery discharging power within the third predetermined time period includes: the vehicle control unit determines the average value of the battery discharging powers at the plurality of sampling times to acquire the battery continuous discharging power.

In some embodiments, different ambient temperatures correspond to different battery continuous discharging powers. The vehicle control unit acquires the battery continuous discharging power under the current environment. Correspondingly, in some embodiments, the process for the vehicle control unit to determine the battery continuous discharging power of the battery includes: based on the ambient temperature, the vehicle control unit acquires the battery continuous discharging power corresponding to the ambient temperature from the correspondence between ambient temperature and continuous discharging power.

In some embodiments, different cell temperatures correspond to different battery continuous discharging powers. The vehicle control unit acquires the battery continuous discharging power corresponding to the current cell temperature. Correspondingly, in some embodiments, the process for the vehicle control unit to determine the battery continuous discharging power of the battery includes: the vehicle control unit acquires the battery continuous discharging power corresponding to the cell temperature from the correspondence between cell temperature and continuous discharging power based on the cell temperature.

One point to note is that the battery continuous discharging power can also be replaced by the battery peak discharging power, which is used to indicate the maximum driving capability of the generator. The method for acquiring the battery peak discharging power is similar to that for acquiring the battery peak charging power, and is not elaborated here. In some embodiments, please continue to refer to FIG. 3, which shows the curves of battery peak charging power and battery peak discharging power during the driving process (specifically, the starting phase) of a hybrid electric vehicle.

(2) The vehicle control unit determines the available power for the air conditioner based on the accelerator pedal position, battery peak charging power, and battery continuous discharging power.

In the case that the accelerator pedal position is less than a predetermined opening degree, the vehicle control unit determines the minimum power between the battery peak charging power and the predetermined power, and determines this minimum power as the available power for the air conditioner. In the case that the accelerator pedal position is not less than the predetermined opening degree, the vehicle control unit determines the minimum power between the battery continuous discharging power and the predetermined power, and determines this minimum power as the available power for the air conditioner.

In some embodiments, both the predetermined opening degree and the predetermined power are set and changed as needed. In the embodiments of the present disclosure, neither the predetermined opening degree nor the predetermined power is specifically limited. In some embodiments, the predetermined opening is 10%, the predetermined power is 8800W, and the available power for the air conditioner is expressed as follows.

In the case that the accelerator pedal position is less than 10%, Min (battery peak discharging power, 8800W) = the available power for the air conditioner; and in the case that the accelerator pedal position is greater than 10%, Min (battery continuous discharging power, 8800W) = the available power for the air conditioner.

In the embodiments of the present disclosure, the vehicle control unit utilizes the battery capacity to provide the maximum available power to the air conditioner, thereby improving the heating efficiency of the air conditioner and reducing the battery heating time in ultra-low temperature environments.

(3) The vehicle control unit determines the first available power of the generator based on the available power of the air conditioner, the battery peak charging power, and the actual drive power of the drive motor.

In some embodiments, the vehicle control unit determines the sum of the available power of the air conditioner, the battery peak charging power, and the actual drive power of the drive motor to acquire the first available power of the generator. In some embodiments, the vehicle control unit performs a weighted sum of the available power of the air conditioner, the battery peak charging power, and the actual drive power of the drive motor to acquire the first available power of the generator.

In some embodiments, the process for the vehicle control unit to control the generator to generate electrical energy based on the first available power includes: the vehicle control unit determines the allowable generation power of the engine based on the first available power; and controls the generator to generate electrical energy based on the allowable generation power of the engine. The allowable generation power is less than the first available power.

The vehicle control unit monitors the engine's water temperature in real-time. In the case that the engine's water temperature exceeds the fourth predetermined temperature, the vehicle control unit switches the heat source for the battery and the cabin to engine water, which means heating the battery and cabin through the engine's water heating system, and stops heating the hybrid electric vehicle's battery and cabin via the air conditioner. This not only improves driving comfort but also reduces the energy consumption of the hybrid electric vehicle.

In some embodiments, the process of determining the allowable generation power of the engine by the vehicle control unit based on the first available power is achieved through the following processes (4) to (6), which include the following.

(4) The vehicle control unit determines the driver requested power of the hybrid electric vehicle based on the accelerator pedal position.

In some embodiments, the vehicle control unit stores in advance the correspondence between the accelerator pedal positions and the driver requested powers, meaning that each accelerator pedal position corresponds to a specific driver requested power. Correspondingly, in some embodiments, the process for the vehicle control unit to determine the driver requested power of the hybrid electric vehicle based on the accelerator pedal position includes: the vehicle control unit acquires the driver requested power corresponding to the accelerator pedal position from the correspondence between accelerator pedal positions and driver requested powers based on the accelerator pedal position.

In some embodiments, the vehicle control unit stores in advance the correspondence between the accelerator pedal position ranges and the driver requested powers, meaning that each accelerator pedal position range corresponds to a driver requested power. Correspondingly, in some embodiments, the process for the vehicle control unit to determine the driver requested power of the hybrid electric vehicle based on the accelerator pedal position includes: the vehicle control unit determines the accelerator pedal position range to which the accelerator pedal position belongs based on the accelerator pedal position, and then acquires the driver requested power corresponding to that accelerator pedal position range from the correspondence between the accelerator pedal position ranges and the driver requested powers based on the determined accelerator pedal position range.

(5) The vehicle control unit determines the original generation power of the generator based on the driver requested power.

In some embodiments, the vehicle control unit stores in advance the correspondence between driver requested powers and original generation powers, meaning that one driver requested power corresponds to one original generation power. Correspondingly, in some embodiments, the process for the vehicle control unit to determine the original generation power of the generator based on the driver requested power includes: the vehicle control unit acquires the original generation power corresponding to the driver requested power from the correspondence between driver requested powers and original generation powers based on the driver requested power.

In some embodiments, the vehicle control unit stores in advance the correspondence between the driver requested power ranges and the original generation powers, meaning that each driver requested power range corresponds to a specific original generation power. Correspondingly, in some embodiments, the process for the vehicle control unit to determine the original generation power of the generator based on the driver requested power includes: the vehicle control unit determines the driver requested power range to which the driver requested power belongs based on the driver requested power, and then, based on this driver requested power range, acquires the original generation power corresponding to that driver requested power range from the correspondence between the driver requested power ranges and the original generation power.

(6) The vehicle control unit determines the allowable generation power of the engine based on the original generation power and the first available power.

In the case where the original generation power is greater than the first available power, the vehicle control unit determines the allowable generation power of the engine as the first available power; and in the case where the original generation power is not greater than the first available power, the vehicle control unit determines the allowable generation power of the engine as the original generation power.

In the embodiments of the present disclosure, the vehicle control unit maps the driver requested power to the original generation power; and in an ultra-low temperature environment, the original generation power is constrained by the first available power to output an allowable generation power, thereby avoiding the problem of battery overcharging in an ultra-low temperature environment and extending the battery life.

In process 206, the vehicle control unit determines the actual generation power of the generator, determines the second available power of the drive motor based on the actual generation power of the generator, and outputs the second available power to the drive motor to make the drive motor drive the hybrid electric vehicle based on the second available power.

The process for the vehicle control unit to determine the second available power of the drive motor based on the actual generation power of the generator includes: the vehicle control unit determines the battery peak discharging power and the actual power of the air conditioner; and determines the second available power of the drive motor based on the battery peak discharging power, the actual power of the air conditioner, and the actual generation power of the generator. In some embodiments, the vehicle control unit determines the sum of the battery peak discharging power and the actual generation power of the engine to acquire the first power, and determines the difference between the first power and the actual power of the air conditioner to acquire the second available power.

It should be noted that processes 204 to206 are recurrently executed. By recurrently executing processes 204 to 206, the driving capability of the drive motor and the generating capability of the generator are both improved. From the product perspective, the geographical range where hybrid electric vehicles can be used extends, i.e., hybrid electric vehicles can operate in extremely low temperature regions. From the customer perspective, it allows for immediate driving upon boarding, eliminating the need for waiting with an empty vehicle, thereby enhancing vehicle usage satisfaction.

In the embodiments of the present disclosure, under ultra-low temperature conditions, by fixing the rotational speed value, the actual drive power of the drive motor is made increase with the increase in accelerator pedal position. The increase in the actual power of the drive motor leads to an increase in the first available power of the generator, which in turn leads to an increase in the actual generation power of the generator. This increase in the actual generation power of the generator further leads to an increase in the second available power of the drive motor. Thus, under ultra-low temperature conditions, the second available power of the drive motor and the first available power of the generator change steadily. The stable second and first available powers enable the hybrid electric vehicle to maintain a certain speed and move forward steadily under ultra-low temperature conditions. Therefore, the application geographical range of the hybrid electric vehicle extends from a product perspective. For example, the hybrid electric vehicle can operate in ultra-low temperature geographical ranges. From a customer perspective, it allows for immediate driving without waiting for an empty vehicle, which enhances vehicle usage satisfaction.

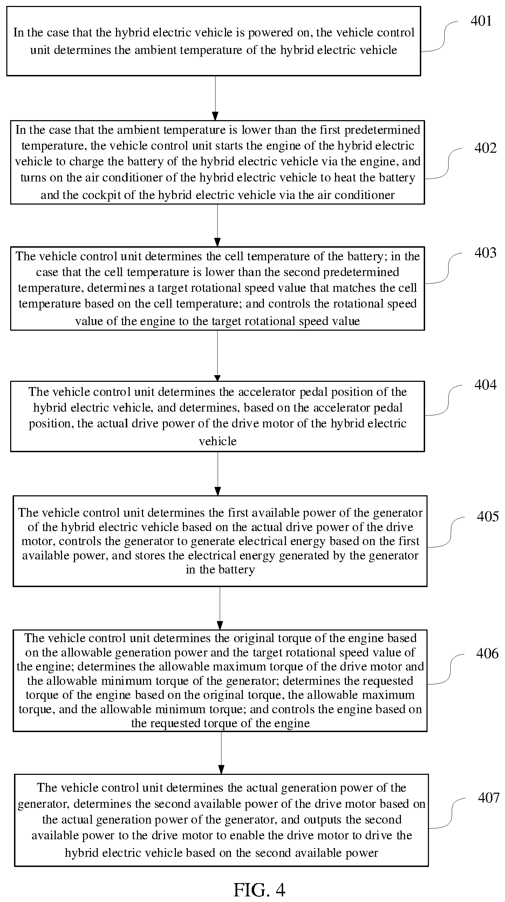

FIG. 4 illustrates a flowchart of a driving control method for a hybrid electric vehicle according to some embodiments of the present disclosure. Referring to FIG. 4, the method includes the following processes.

In process 401, in the case that the hybrid electric vehicle is powered on, the vehicle control unit determines the ambient temperature of the hybrid electric vehicle.

In some embodiments, this process is identical to process 201 and is not further elaborated here.

In process 402, in the case that the ambient temperature is lower than the first predetermined temperature, the vehicle control unit starts the engine of the hybrid electric vehicle, charges the battery of the hybrid electric vehicle via the engine, and turns on the air conditioner of the hybrid electric vehicle to heat the battery and the cockpit of the hybrid electric vehicle via the air conditioner.

In some embodiments, this process is identical to process 202 and is not further elaborated here.

In process 403, the vehicle control unit determines the cell temperature of the battery; in the case that the cell temperature is lower than the second predetermined temperature, determines a target rotational speed value that matches the cell temperature based on the cell temperature; and controls the rotational speed value of the engine to the target rotational speed value.

In some embodiments, this process is identical to process 203 and is not elaborated here.

In process 404, the vehicle control unit determines the accelerator pedal position of the hybrid electric vehicle, and determins, based on the accelerator pedal position, the actual drive power of the drive motor of the hybrid electric vehicle.

In some embodiments, this process is identical to process 204 and is not further elaborated here.

In process 405, the vehicle control unit determines the first available power of the generator of the hybrid electric vehicle based on the actual drive power of the drive motor, determines the allowable generation power of the engine based on the first available power, controls the generator to generate electrical energy based on the allowable generation power of the engine, and stores the electrical energy generated by the generator in the battery.

In some embodiments, this process is identical to process 205 and is not further elaborated here.

In process 406, the vehicle control unit determines the original torque of the engine based on the allowable generation power and the target rotational speed value of the engine; determines the allowable maximum torque of the drive motor and the allowable minimum torque of the generator; determines the requested torque of the engine based on the original torque, the allowable maximum torque, and the allowable minimum torque; and controls the engine based on the requested torque of the engine.

In some embodiments, please continue to refer to FIG. 3, which illustrates the variation curve of the engine's requested torque during the driving process of a hybrid electric vehicle (specifically referring to the starting phase).

The process of determining the original torque of the engine by the vehicle control unit based on the allowable generation power and the target rotational speed value of the engine includes: the vehicle control unit determines the initial torque of the engine based on the following formula I. Formula I: $Allowable generation power = 2 π * initial torque * target rotational speed value .$

In some embodiments, the process of determining the allowable maximum torque of the drive motor and the allowable minimum torque of the generator by the vehicle control unit is achieved through the following processes (1) to (3), including the following.
(1) The vehicle control unit determines a motor efficiency table and a motor speed of the generator.

The motor efficiency table stores the motor efficiency of the generator, which represents the energy conversion efficiency of the generator. Additionally, the vehicle control unit stores the motor efficiency table of the generator. In this process, the vehicle control unit acquires the stored motor efficiency table of the generator. The motor speed is the current speed of the generator.

Power is equal to the product of torque and speed divided by 9550 (i.e., the formula is: power = torque × speed ÷ 9550).

(2) The vehicle control unit determines the allowable maximum torque of the drive motor based on the second available power, motor efficiency table, and motor speed.

The allowable maximum torque of the drive motor is used to constrain the torque of the drive motor, so that the torque of the drive motor cannot exceed the allowable maximum torque. In some embodiments, the vehicle control unit determines the product of the second available power and the motor efficiency of the generator stored in the motor efficiency table to acquire the third available power of the generator; and the vehicle control unit determines, based on the third available power of the generator and the motor speed of the generator, the allowable maximum torque of the drive motor. In some embodiments, the vehicle control unit determines the allowable maximum torque of the drive motor based on the third available power of the generator and the motor speed of the generator using the following formula II. Formula II: $Third available power = allowable maximum torque \times motor speed \div 9550$

(3) The vehicle control unit determines the allowable minimum torque of the generator based on the first available power, motor efficiency table, and motor speed.

The allowable minimum torque of the generator is used to constrain the torque of the generator, ensuring that the torque of the generator cannot be lower than the allowable minimum torque. In some embodiments, the vehicle control unit determines the product of the first available power and the motor efficiency of the generator stored in the motor efficiency table to obtain the fourth available power of the generator; and determines, based on the fourth available power of the generator and the motor speed of the generator, the allowable minimum torque of the generator. In some embodiments, the vehicle control unit determines the allowable minimum torque of the drive motor based on the fourth available power of the generator and the motor speed of the generator using the following formula III. Formula III: $Fourth available power = allowable minimum torque \times motor speed \div 9550$

In some embodiments, please continue to refer to FIG. 3, which illustrates the variation curves of the allowable maximum torque and the allowable minimum torque during the driving process of a hybrid electric vehicle (specifically referring to the starting phase).

In some embodiments, the process for the vehicle control unit to determine the requested torque of the engine based on the original torque, the allowable maximum torque, and the allowable minimum torque includes: in the case that the original torque is greater than the allowable minimum torque and less than the allowable maximum torque, the vehicle control unit determines the requested torque of the engine as the original torque; in the case that the original torque is greater than the allowable maximum torque, the vehicle control unit determines the requested torque of the engine as the allowable maximum torque; and in the case that the original torque is less than the allowable minimum torque, the vehicle control unit determines the requested torque of the engine as the allowable minimum torque.

In process 407, the vehicle control unit determines the actual generation power of the generator, determines the second available power of the drive motor based on the actual generation power of the generator, and outputs the second available power to the drive motor to enable the drive motor to drive the hybrid electric vehicle based on the second available power.

In some embodiments, this process is identical to process 206, and is not elaborated here.

It should be noted that during the user's driving of a hybrid electric vehicle (especially during the initial stage of the hybrid electric vehicle's startup), the accelerator pedal position of the hybrid electric vehicle gradually increases. During this period, the actual drive power of the drive motor also gradually increases. The increase in the actual drive power of the drive motor leads to a gradual increase in the first available power of the engine. The increase in the first available power results in a gradual increase in the allowable minimum torque of the engine and the allowable generation power. With the increase in the allowable generation power and unchanged rotational speed value of the engine, the constraints of the engine's allowable maximum torque and allowable minimum torque cause the requested torque of the engine to increase. The increase in the actual torque of the engine leads to an increase in the second available power of the drive motor. Based on the above discussion, processes 403-407 result in a steady change in the second available power of the drive motor and the first available power of the generator. The stable second and first available powers enable the hybrid electric vehicle to maintain a certain speed and move forward steadily in ultra-low temperature environments.

The power distribution method in ultra-low temperature environments provided in embodiments of the present disclosure is achieved by spiral control, which enhances both the driving capability of the drive motor and the generation capability of the generator. From the product perspective, the geographical range where hybrid electric vehicles can be used extends; for example, hybrid electric vehicles can operate in ultra-low temperature regions. From the customer perspective, it allows for immediate driving upon boarding, eliminating the need for waiting with an empty vehicle, thereby improving vehicle satisfaction.

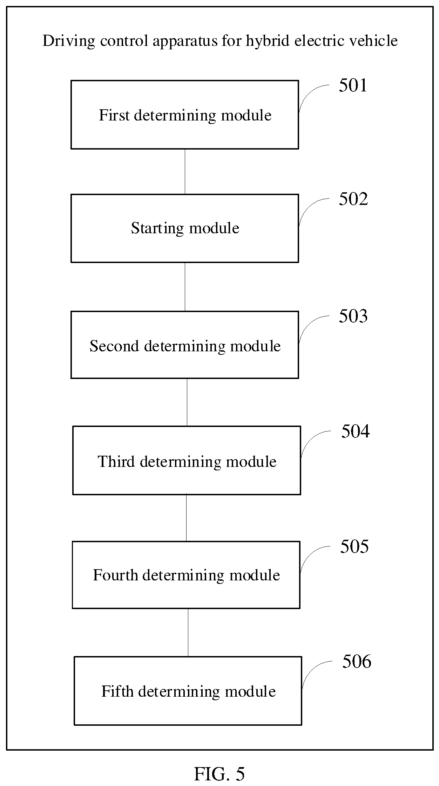

FIG. 5 illustrates a block diagram of a driving control apparatus for a hybrid electric vehicle according to some embodiments of the present disclosure. The apparatus includes:
a first determining module 501, configured to determine, in response to the hybrid electric vehicle being powered on, an ambient temperature of the hybrid electric vehicle;
a starting module 502, configured to in response to the ambient temperature being lower than a first predetermined temperature, start an engine of the hybrid electric vehicle to charge a battery of the hybrid electric vehicle via the engine, and turn on an air conditioner of the hybrid electric vehicle to heat the battery and a cockpit of the hybrid electric vehicle via the air conditioner;
a second determining module 503, configured to: determine a cell temperature of the battery; and in response to the cell temperature being lower than a second predetermined temperature, determine a target rotational speed value that matches the cell temperature based on the cell temperature; and control a rotational speed value of the engine to be the target rotational speed value;
a third determining module 504, configured to: determine an accelerator pedal position of the hybrid electric vehicle and determine an actual drive power of a drive motor of the hybrid electric vehicle based on the accelerator pedal position;
a fourth determining module 505, configured to: determine a first available power of a generator of the hybrid electric vehicle based on the actual drive power of the drive motor, control the generator to generate electrical energy based on the first available power, and store the electrical energy generated by the generator in the battery; and
a fifth determining module 506, configured to: determine an actual generation power of the generator, determine a second available power of the drive motor based on the actual generation power of the generator, and output the second available power to the drive motor to enable the drive motor to drive the hybrid electric vehicle based on the second available power.

In some embodiments, the fourth determining module 505 is configured to: determine a battery peak charging power and a battery continuous discharging power of the battery; determine an available power for the air conditioner based on the accelerator pedal position, the battery peak charging power, and the battery continuous discharging power; and determine the first available power of the generator based on the available power of the air conditioner, the battery peak charging power, and the actual drive power of the drive motor.

In some embodiments, the fourth determining module 505 is configured to: determine an allowable generation power of the engine based on the first available power; and control the generator to generate electrical energy based on the allowable generation power of the engine.

In some embodiments, the fourth determining module 505 is configured to: determine a driver requested power of the hybrid electric vehicle based on the accelerator pedal position; determine an original generation power of the generator based on the driver requested power; and determine the allowable generation power of the engine based on the original generation power and the first available power.

In some embodiments, the apparatus further includes:
a sixth determining module, configured to determine an original torque of the engine based on the allowable generation power and the target rotational speed value of the engine;
a seventh determining module, configured to determine an allowable maximum torque of the drive motor and an allowable minimum torque of the generator;
an eighth determining module, configured to determine a requested torque of the engine based on the original torque, the allowable maximum torque, and the allowable minimum torque; and
a controlling module, configured to control the engine based on the requested torque of the engine.

In some embodiments, the seventh determining module is configured to: determine a motor efficiency table and a motor speed of the generator; determine the allowable maximum torque of the drive motor based on the second available power, the motor efficiency table, and the motor speed; and determine the allowable minimum torque of the generator based on the first available power, the motor efficiency table, and the motor speed.

It should be noted that the driving control apparatus for a hybrid electric vehicle provided in the above embodiments is exemplified only based on the division of the aforementioned functional modules when performing driving control of hybrid electric vehicles. In practical applications, the aforementioned functions can be allocated to different functional modules as needed, that is, the internal structure of the vehicle control unit can be divided into different functional modules to fulfill all or part of the functions described above. Additionally, the driving control apparatus for the hybrid electric vehicle provided in the above embodiments and the embodiments of the driving control method for the hybrid electric vehicle have the same concept. The specific implementation process is detailed in the method embodiments and is not further elaborated here.

In the embodiments of the present disclosure, under ultra-low temperature conditions, by fixing the rotational speed value, the actual drive power of the drive motor is made increase with the increase in accelerator pedal position. The increase in the actual power of the drive motor leads to an increase in the first available power of the generator, which in turn leads to an increase in the actual generation power of the generator. This increase in the actual generation power of the generator further leads to an increase in the second available power of the drive motor. Thus, under ultra-low temperature conditions, the second available power of the drive motor and the first available power of the generator change steadily. The stable second and first available powers enable the hybrid electric vehicle to maintain a certain speed and move forward steadily under ultra-low temperature conditions. Therefore, the application geographical range of the hybrid electric vehicle extends from a product perspective. For example, the hybrid electric vehicle can operate in ultra-low temperature geographical ranges. From a customer perspective, it allows for immediate driving without waiting for an empty vehicle, which enhances vehicle usage satisfaction.

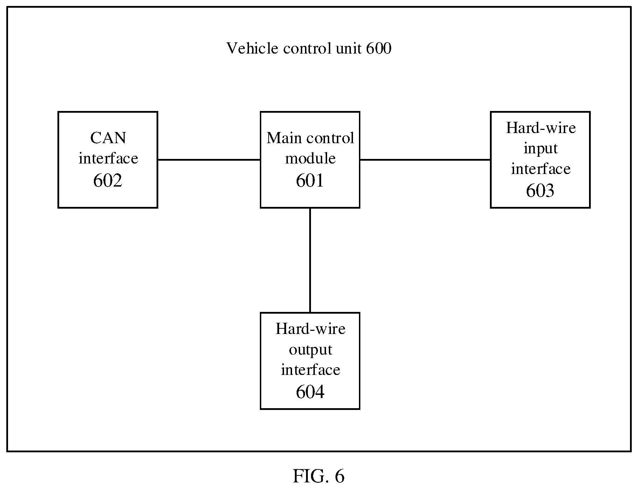

FIG. 6 is a schematic structural diagram of a vehicle control unit according to embodiments of the present disclosure. Generally, the vehicle control unit 600 includes: a main control module 601, a Controller Area Network (CAN) interface 602, a hard-wire input interface 603, and a hard-wire output interface 604. The main control module 601 is connected to the CAN interface 602, the hard-wire input interface 603, and the hard-wire output interface 604, respectively.

The main control module 601 typically includes a processor and a memory. In some embodiments, the processor includes one or more processing cores, such as a 4-core processor, a 6-core processor, etc. In some embodiments, the processor is implemented in at least one hardware form of DSP (Digital Signal Processing), FPGA (Field-Programmable Gate Array), or PLA (Programmable Logic Array). In some embodiments, the processor also includes a main processor and a co-processor. The main processor is a processor used for processing data in the awake state, also known as a CPU (Central Processing Unit). The co-processor is a low-power processor used for processing data in the standby state. In some embodiments, the processor is integrated with a GPU (Graphics Processing Unit), which is responsible for rendering and drawing the content required to be displayed on the vehicle display screen. In some embodiments, the processor further includes an AI (Artificial Intelligence) processor, which is used for processing computational operations related to machine learning. In some embodiments, the memory includes one or more computer-readable storage media, which is non-transitory in some embodiments. In some embodiments, the memory further includes high-speed random access memory and non-volatile memory, such as one or more disk storage devices and flash memory storage devices. In some embodiments, the non-transitory computer-readable storage media in the memory are used to store one or more computer programs, the one or more computer programs, when executed by the processor, cause the processor to implement the driving control method for the hybrid electric vehicle provided by the method embodiments of the present disclosure.

In some embodiments, the CAN interface 602 included a power CAN interface, a motor CAN interface, and a diagnostic CAN interface. The power CAN interface is configured for communication with the vehicle's power system module, the motor CAN interface is configured for communication with the vehicle's motor controller, and the diagnostic CAN interface is configured for communication with diagnostic equipment.

The hardwire input interface 603 is used to receive hardwire control signals. The hardwire output interface 604 is used to send control instructions to the electronic control components of the vehicle, so that the electronic control components of the vehicle perform corresponding actions. The electronic control components of the vehicle include a power management system, a motor controller, an on-board charger, a body control system, etc.

The main control module 601 is able to communicate with the vehicle's power system module, motor controller, and diagnostic equipment via the CAN interface 602, and generate control instructions based on the hardwire control signals received via the hardwire input interface 603, to send control instructions to the vehicle's electronic control components via the hardwire output interface 604.

Those skilled in the art can understand that the structure shown in FIG. 6 does not constitute a limitation on the vehicle control unit 600, and the vehicle control unit includes more or fewer components than shown, or combines certain components, or adopts different component arrangements in some embodiments.

The embodiments of the present disclosure further provide a computer-readable storage medium, in which one or more program codes are stored. The one or more program codes, when loaded and executed by a processor, cause the processor to implement the driving control method of the hybrid electric vehicle as described in any of the above implementation modes. In some embodiments, the storage medium is a non-transitory computer-readable storage medium, such as, a ROM (Read-Only Memory), RAM (Random Access Memory), CD-ROM (Compact Disc Read-Only Memory), magnetic tape, floppy disk, optical data storage device.

The embodiments of the present disclosure further provide a computer program product that stores one or more program codes. The one or more program codes, when loaded and executed by a processor, cause the processor to implement the driving control method of a hybrid electric vehicle as shown in the various embodiments above.

In some embodiments, the computer program product involved in the embodiments of the present disclosure is deployed to execute on a vehicle control unit, or on multiple vehicle control units located at a single site, or on multiple vehicle control units distributed across multiple sites and interconnected via a communication network. These multiple vehicle control units distributed across multiple sites and interconnected via a communication network forms a blockchain system.

Those skilled in the art can understand that all or part of the processes for implementing the above embodiments can be accomplished through hardware, or through a program instructing the relevant hardware to complete. In some embodiments, the program is stored in a computer-readable storage medium, and the aforementioned storage medium is a read-only memory, a magnetic disk, or an optical disk, etc.

The above description is only intended to facilitate the understanding of the technical solution of the present disclosure by those skilled in the art, and is not intended to limit the present disclosure. Any modifications, equivalent substitutions, improvements, etc. made within the concept and principles of the present disclosure shall be included within the scope of protection of the present disclosure.

## Claims

1. A driving control method for a hybrid electric vehicle, comprising:
determining, in response to the hybrid electric vehicle being powered on, an ambient temperature of the hybrid electric vehicle;
in response to the ambient temperature being lower than a first predetermined temperature, starting an engine of the hybrid electric vehicle to charge battery of the hybrid electric vehicle via the engine, and turning on an air conditioner of the hybrid electric vehicle to heat the battery and a cockpit of the hybrid electric vehicle via the air conditioner;
determining a cell temperature of the battery, and in response to the cell temperature being lower than a second predetermined temperature, determining, based on the cell temperature, a target rotational speed value that matches the cell temperature; and controlling a rotational speed value of the engine to be the target rotational speed value;
determining an accelerator pedal position of the hybrid electric vehicle and determining an actual drive power of a drive motor of the hybrid electric vehicle based on the accelerator pedal position;
determining a first available power of a generator of the hybrid electric vehicle based on the actual drive power of the drive motor, controlling the generator to generate electrical energy based on the first available power, and storing the electrical energy generated by the generator in the battery; and
determining an actual generation power of the generator, determining a second available power of the drive motor based on the actual generation power of the generator, and outputting the second available power to the drive motor to enable the drive motor to drive the hybrid electric vehicle based on the second available power.

2. The method according to claim 1, wherein determining the first available power of the generator of the hybrid electric vehicle based on the actual drive power of the drive motor comprises:
determining a battery peak charging power and a battery continuous discharging power of the battery;
determining an available power for the air conditioner based on the accelerator pedal position, the battery peak charging power, and the battery continuous discharging power; and
determining the first available power of the generator based on the available power of the air conditioner, the battery peak charging power, and the actual drive power of the drive motor.

3. The method according to claim 1 or 2, wherein controlling the generator to generate electrical energy based on the first available power comprises:
determining an allowable generation power of the engine based on the first available power; and
controlling, based on the allowable generation power of the engine, the generator to generate electrical energy.

4. The method according to claim 3, wherein determining the allowable generation power of the engine based on the first available power comprises:
determining a driver requested power of the hybrid electric vehicle based on the accelerator pedal position;
determining an original generation power of the generator based on the driver requested power; and
determining the allowable generation power of the engine based on the original generation power and the first available power.

5. The method according to claim 3, further comprising:
determining an original torque of the engine based on the allowable generation power and the target rotational speed value of the engine;
determining an allowable maximum torque of the drive motor and an allowable minimum torque of the generator;
determining a requested torque of the engine based on the original torque, the allowable maximum torque, and the allowable minimum torque; and
controlling the engine based on the requested torque of the engine.

6. The method according to claim 5, wherein determining the allowable maximum torque of the drive motor and the allowable minimum torque of the generator comprises:
determining a motor efficiency table and a motor speed of the generator;
determining the allowable maximum torque of the drive motor based on the second available power, the motor efficiency table, and the motor speed; and
determining the allowable minimum torque of the generator based on the first available power, the motor efficiency table, and the motor speed.

7. A driving control apparatus for a hybrid electric vehicle, comprising:
a first determining module, configured to: determine, in response to the hybrid electric vehicle being powered on, an ambient temperature of the hybrid electric vehicle;
a starting module, configured to: in response to the ambient temperature being lower than a first predetermined temperature, start an engine of the hybrid electric vehicle to charge a battery of the hybrid electric vehicle via the engine, and turn on an air conditioner of the hybrid electric vehicle to heat the battery and a cockpit of the hybrid electric vehicle via the air conditioner;
a second determining module, configured to: determine a cell temperature of the battery, and in response to the cell temperature being lower than a second predetermined temperature and the hybrid electric vehicle being started, determine, based on the cell temperature, a target rotational speed value that matches the cell temperature; and control a rotational speed value of the engine to be the target rotational speed value;
a third determining module, configured to determine an accelerator pedal position of the hybrid electric vehicle and determine an actual drive power of a drive motor of the hybrid electric vehicle based on the accelerator pedal position;
a fourth determining module, configured to: determine a first available power of a generator of the hybrid electric vehicle based on the actual drive power of the drive motor, control the generator to generate electrical energy based on the first available power, and store the electrical energy generated by the generator in the battery; and
a fifth determining module, configured to: determine an actual generation power of the generator, determine a second available power of the drive motor based on the actual generation power of the generator, and output the second available power to the drive motor to enable the drive motor to drive the hybrid electric vehicle based on the second available power.

8. The apparatus according to claim 7, wherein the fourth determining module is configured to: determine a battery peak charging power and a battery continuous discharging power of the battery; determine an available power for the air conditioner based on the accelerator pedal position, the battery peak charging power, and the battery continuous discharging power; and determine the first available power of the generator based on the available power of the air conditioner, the battery peak charging power, and the actual drive power of the drive motor.

9. The apparatus according to claim 7 or 8, wherein the fourth determining module is configured to: determine an allowable generation power of the engine based on the first available power; and control the generator to generate electrical energy based on the allowable generation power of the engine.

10. The apparatus according to claim 9, wherein the fourth determining module is configured to: determine a driver requested power of the hybrid electric vehicle based on the accelerator pedal position; determine an original generation power of the generator based on the driver requested power; and determine the allowable generation power of the engine based on the original generation power and the first available power.

11. The apparatus according to claim 9, further comprising:
a sixth determining module, configured to determine an original torque of the engine based on the allowable generation power and the target rotational speed value of the engine;
a seventh determining module, configured to determine an allowable maximum torque of the drive motor and an allowable minimum torque of the generator;
an eighth determining module, configured to determine a requested torque of the engine based on the original torque, the allowable maximum torque, and the allowable minimum torque; and
a controlling module, configured to control the engine based on the requested torque of the engine.

12. The apparatus according to claim 11, wherein the seventh determining module is configured to: determine a motor efficiency table and a motor speed of the generator; determine the allowable maximum torque of the drive motor based on the second available power, the motor efficiency table, and the motor speed; and determine the allowable minimum torque of the generator based on the first available power, the motor efficiency table, and the motor speed.

13. A vehicle control unit, comprising a main control module, wherein the main control module comprises a processor and a memory, the memory storing one or more program codes, wherein the one or more program codes, when loaded and executed by the processor, cause the vehicle control unit to perform the driving control method as defined in any one of claims 1 to 6.

14. A computer-readable storage medium, wherein the storage medium stores one or more program codes, wherein the one or more program codes, when loaded and executed by a processor, cause the processor to perform the driving control method as defined in any one of claims 1 to 6.

15. A computer program product, wherein the product stores one or more program codes, wherein the one or more program codes, when executed by a processor, cause the processor to perform the driving control method as defined in any one of claims 1 to 6.
